# EUROPEAN PATENT APPLICATION

(11) **EP 1 623 938 A1**
(43) Date of publication of application: **08.02.2006**
(21) Application number: 04018770.0
(22) Date of filing: 06.08.2004
(51) Int. Cl.: B65G 21/12, B65G 21/22, B65G 17/20

(54) **Height adjustable conveyor**

(71) Applicant: EXPEDIT A/S, DK-8370 Hadsten (DK)
(72) Inventor: Loye, Bjarne, 8370 Hadsten (DK)
(74) Representative: Knudsen, Christian Egtved

(57) **Abstract**

With the conveyor 1 according to the invention the distance 16 between the building component 3 and the suspended objects 8 in the limited areas 12 is adjustable according to the corresponding individual. By building a conveyor 1 for transporting objects 8, where the conveyor 1 is mounted the usual way related to fixed building 3 component like roof, walls and floors 17, and where the conveyor 1 consists of a hanging track with a chain. The objects 8 to be handled can e.g. be metal part to be painted. The objects 8 are suspended by the conveyor 1 under influence of gravity related to the chain element, this can be carried out by a few suspension points - one or two. When the objects 8 to be handled are handled in limited areas 12 by individuals it is advantageous that the distance 16 between the building component, usually the floor 17, and the suspended objects 8 in the limited areas 12 is adjustable according to corresponding individual to avoid positions or lifts not healthy for the human body. Usually the height regulation is only within one meter but the result may be huge from an ergonomic point of view.

## Description

The present invention relates to a conveyor for transporting objects in industrial environments and mounted related to fixed building component, where the conveyor consists of a track element with a chain element, and where the objects to be handled by the conveyor are suspended under influence of gravity related to the chain element, and where the objects to be handled are handled in at least one limited area by an individual.

Furthermore the conveyor is for transporting objects in industrial environments. Preferably the conveyor comprises a track with the chain positioned within the track and where the track partly enclosing the chain, where the aperture in the track, through which the objects are related to the chain, is positioned in the side of the track, preferably in the topside or the bottomside - relative to gravity.

US5839371, Knüttel, discloses a mono- or twin-rail overhead chain conveyor useful for transporting heavy loads such as motor vehicle parts wherein the conveyor has a chain track in the form of an I-shaped profile with running gear which can move along said track and has roller blocks for mounting rollers which are supported on the chain track, the roller blocks being connected to a traction means for pulling the running gear and for a monorail overhead chain conveyor, the running gear is in the form of a loading running gear and for a twin-rail overhead chain conveyor, it is in the form of towing running gear which interacts with loading running gear movable on a load rail running below the chain track and to render wear-free, silent running possible, the traction means is a rubber or plastic belt having a single-stranded metal, glass fibre or carbon fibre insert.

US6247581, Oswald, discloses an adjustable conveyor for conveying a printed circuit board includes a frame, a first track including a first conveyor belt, a second track including a second conveyor belt, wherein the first track and the second track are mounted on the frame so that the first track and the second track are parallel to each other. Each of the first track and the second track includes a first element and a second element that are slidably connected to each other so that a space between the first element and the second element is adjustable so as to change a length of the respective track. Each of the first elements includes a plurality of slide blocks. The slide blocks are slidably mounted on the first elements in an overlapping manner so that an amount of overlap between the slide blocks is adjustable as the space between the first element and the second element is adjusted. The conveyor also includes a device for simultaneously driving the first and second conveyor belts.

US2003164280, Delaporte, discloses a curved conveyor section allows the transport of articles guided between two guide rails and comprises means for adjusting the spacing between the two guide rails. At least one of the two guide rails is elastically deformable and the adjusting means are designed to displace and deform said elastically deformable guide rail so as to provide it with a specific curvature, which depends on its position. Preferably, the adjusting means comprise, for each guide rail, a deforming plate, which is elastically deformable, and the guide rail is rigidly secured to said deforming plate.

The disadvantage with the known conveyor technique is that the handling height is set out when the conveyor is constructed or at least mounted. The more strong and specialised the conveyor is the harder it is to modify its heights. This can be a disadvantage in connection with man - machine interface. When using hanging conveyors they are usually too high due to the possibility to extend or suspend the items to be handled by the conveyor to a smaller or lower height.

The scope of the invention is to reduce the ergonomic load on the individuals or people loading and unloading the single- or mono- or hanging conveyor through a variable height of the conveyor especially in that area where the conveyor is loaded or unloaded. Furthermore the scope is to increase the handling speed when loading and unloading the conveyor as number of items per time slice may be crucial in industrial production.

With the conveyor according to the invention the distance between the building component and the suspended objects in the limited areas are adjustable according to corresponding individual. By building a conveyor for transporting objects, where the conveyor is mounted the usual way related to fixed building component like roof, walls and floors, and where the conveyor consists of a hanging track with a chain. The objects to be handled can be e.g. metal part to be painted or piece of cattle beef. The objects are suspended by the conveyor under influence of gravity related to the chain element, this can be carried out by a few suspension points - one or two. When the objects to be handled are handled in limited areas by individuals it is advantageous that the distance between the building component, usually the floor, and the suspended objects in the limited areas is adjustable according to corresponding individual to avoid positions or lifts not healthy for the human body. Usually the height regulation is only within one meter but the result may be large from an ergonomic point of view.

This has especially show advantageous and easy to carry out when the conveyor is a single- or mono- or hanging conveyor with only a single rod or tube connected to the roof or floor per meter of conveyor. This rod or tube can be made of variable length.

According to the invention the conveyor can be a single- or mono- or hanging conveyor, where the track element is a single track, and where the track is fixed related to the building component, and where the chain is movable related to the track. This is the most simple and efficient conveyor type to reduce ergonomic load for the individual to handle the objects.

Furthermore according to the invention the conveyor is a single- or mono- or hanging conveyor, where the track element and the chain element is a single track with a chain positioned within the track, and where the objects to be handled by the conveyor are suspended downwards - related to gravity - from the chain. This is the most common single- or mono- or hanging conveyor.

According to the invention the track with the chain positioned within the track is a track partly enclosing the chain, where an aperture in the track, through which the objects are related to the chain, is positioned in the side of the track, preferably in the topside or the bottomside - relative to gravity. Hereby it is possible to control accumulated lubrication and avoid contamination of items as well as individuals.

It has shown advantageous that in that the relation between the object and the chain element is the fixed distance between suspended objects and the chain, where this distance is determined by a piece of wire or an individual fixture for that specific object, where that wire can be monofilament with a diameter up till 15 mm, preferably between 0.8 mm and 5 mm, most preferable about 1.2 mm. Hereby different items can be handled and change-over to handle other objects or items is easy to carry through especially when the height of the conveyor is variable.

According to the invention the distance between the building component and the suspended objects in the limited area is the height of the object above the floor, where this height is adjustable through height adjustable means, and that the height is adjustable according to the individual on basis of ergonomics. As most individuals uses the floor as a reference either through their feet or through a chair this is the most relevant distance. Although the conveyor usually not directly connected to the floor most other building components are stable enough to carry a hanging conveyor and let the distance to the floor be the critical reference.

It has shown advantageous as the stationary part of the conveyor is the track that the height adjustable means acts upon the distance between the fixed building component and the suspended objects in the limited area, preferably that the height adjustable means acts upon the distance between the fixed building component and the track element.

As the individual or person handling items in connection with the conveyor the ergonomic based reasons for adjustment may be chosen among, lifting height, weight, combined lifting and turning, positioning after handling, repetitive handlings or necessity of using tools for the handling of the objects. As it may be impossible to satisfy all needs it is important for the individual to change position from time to time. The interval for changing may be most individual. Some may change every half hour others may not whish to change during a days work.

The individual dealing with the conveyor is only in frequent physical contact with the conveyor in the limited area is near by the handling area where the individual has to mount or dismount objects to the conveyor. In all other areas the conveyor can be normally firm suspended to the building.

The energy for the height adjustable means can be supplied by the individual, but electro motors, rack and pinion drive, hydraulic rotating or linear motors, worm gear, servomotors or linear actuators, controlled according to the individual on basis of ergonomics and mounted as suspension of the track related to the fixed building component are among energy supplying components used to day in the industry.

According to the invention the height adjustable means may be controlled by one or more of the following control arrangements, pushbuttons manually activated by the individual, automatic by a computer based on a suitable input, or a combination manually and automatic, where the suitable input can be one or more of the following static or dynamic inputs, identification of the individual or identification of the object. This may increase the ergonomic situation where an individual mounts or dismount items connected to the conveyor.

Furthermore according to the invention the height adjustable means can be controlled automatically by input from a computer containing information of sequentially following object, or reading barcodes connected to the object, or performing image recognition on the objects. Modem manufacturing often deals with small series leading to frequent changes and this may stress the individual. This stress may be diminished by the invention.

A conveyor according to the invention may only need contact with individuals in limited areas where the limited area is near by the handling area where the individual has to mount or dismount objects to the conveyor, and that the number of limited areas may be between 1 and 10, preferably between 2 and 5, most preferably 2 till 3, and that the amount of adjustment in each area may be limited by the total amount of adjustment for all the areas, and that each individual along the conveyor is able to select amount of adjustment in own limited area. Hereby the total efficiency of the conveyor can be increased without damaging the ergonomics. At the edge the whole conveyor may be height adjustable all over, which is unrealistic, it is more realistic that the limited area, where the conveyor is height adjustable is near by the handling area where the individual has to mount or dismount objects to the conveyor.

The articulated joint to be used in the invention works well when consisting of two pieces of sheet metal with each end bolted to each side of a cut through the track, where each sheet metal being positioned so that it possesses the least resistance to the moveability. Although this is not a complicated solution it has proved stability and is easy to establish.

Finally according to the invention the height adjustable means controlled according to the individual on basis of ergonomics increase or decrease the distance to the fixed building component when activated, and when not activated locks in position so that the track will be secured with a fixed distance related to the fixed building component. Hereby a stable function of the conveyor can be achieved.

Below the invention is illustrated according to the best mode described in the drawing, where,
- Fig. 1: shows a layout of building with conveyor related to fixed building components,
- Fig. 2: details of conveyor with height adjustable means,
- Fig. 3: three sections with conveyor with height adjustable means, and
- Fig. 4: details of chain in track at articulated joint.

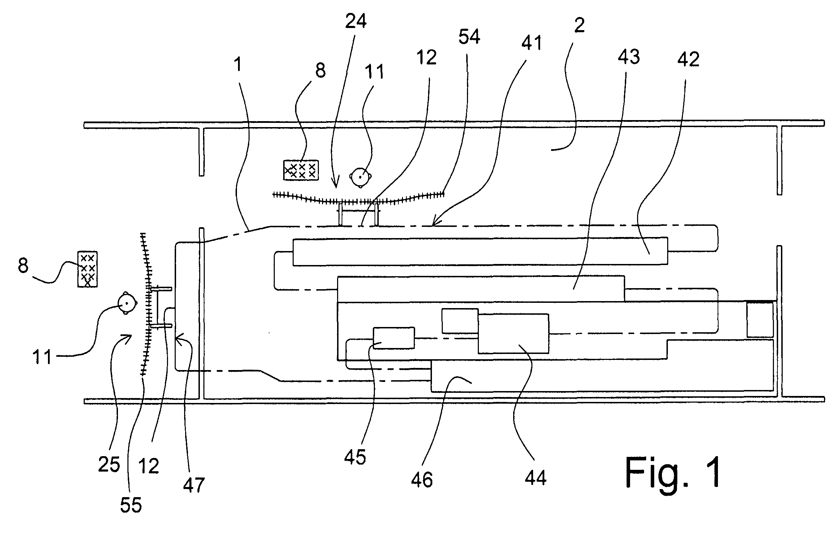

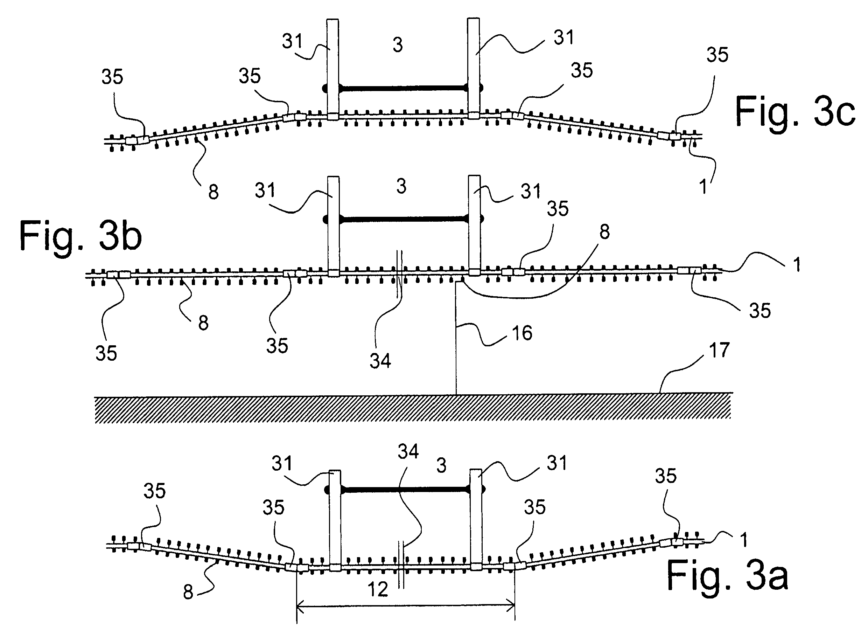

Fig. 1 shows a layout of building 2 with conveyor 1 related to fixed building components. The layout is seen from the top. The conveyor 1 is suspended from the ceiling (not shown). The route of the conveyor track passes a limited area 12, where objects 8 are mounted 41 on the chain of the conveyor 1. The next two stations are surface 42 treatment and drying 43. Both these stations 42, 43 are automatic and can be conducted in ordinary industrial environments. Hereafter follows an automated painting station 44, a manual painting station 45 and a hardening oven 46. The last three stations 44, 45, 46 are conducted in controlled environment and the manual paintjob 45 may be conducted in fresh air suit. After the hardening the temperature is lowered till finally the objects 8 or items are dismounted 47 manually in a limited area 12. In these two limited areas 12 height of the conveyor 1 may be adjusted according to the invention. The two limited areas 12, where items or objects 8 are handled manually by individuals 11 are marked 24 and 25. In these limited areas 12 the raised or lowered conveyor I is shown schematically 54, 55 from the side, further see fig. 3.

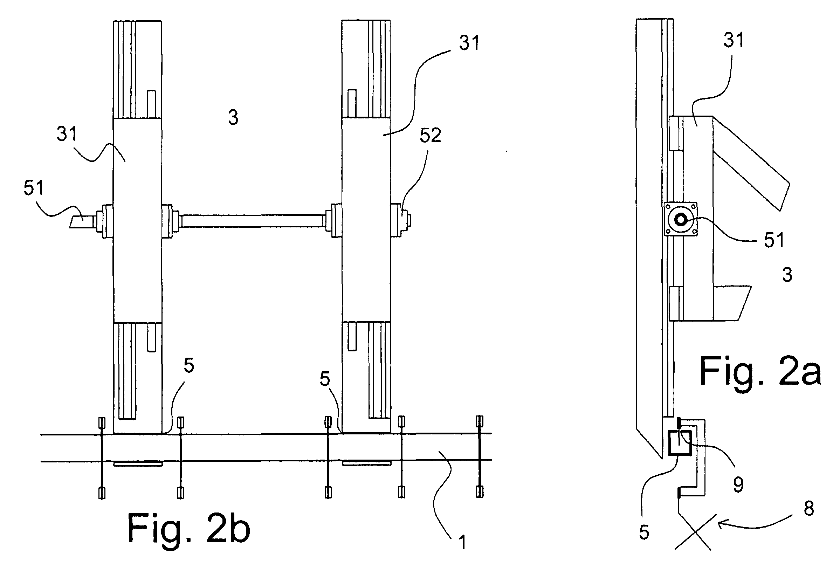

Fig. 2 shows details of conveyor 1 with height adjustable means 31. Here we have got two ganged rack and pinion drives 51, 52 connecting the building component 3 to the track 5. The track 5 is open in the topside. The aperture is marked 9. The two racks 51, 52 are adjusted simultaneously. Fig. 2b is seen from the side of the individual, fig. 2a is seen from the side. There may be more than two height adjustable means 31. The actual number depends upon the weight each height adjustable means 31 can carry and the needed speed for movement. The motor speed can through gearing be substituted by lifting power.

Fig. 3 shows three sections with conveyor 1 with height adjustable means 31 seen from point of view of the individual operating the conveyor 1. In fig. 3a the conveyor I is lowered. In fig. 3b the conveyor 1 has a continuous level or distance 16 to the floor 17 and in fig. 3c the conveyor 1 is raised. In fig. 3 (a and c) the limited area 12 is of the same size due to the position of the four joints 35. The height adjustable means 31 may be mounted to the wall as a building component 3.

The track 5 is equipped with a buffer section 34 between the articulated joints 35 and the height adjustable means 31 (see fig. 3). This buffer section 34 will have to compensate for the elongation of the track 5 when the adjustable means 31 travels from one extreme to the other. The track 5 is shortest when conveyor 1 is in level (fig. 3b). When the conveyor 1 is in one of the showed extremes (fig. 3a or 3c) the buffer section 34 will have to compensate for the rest of conveyor 1 (outside the limited area 12) being fixed to the fixed building component 3. Under the circumstances where the travel of the height adjustable means 31 are up till 400 mm the buffer section 34 will have to compensate for 37 mm. These figures are just to illustrate the need for the buffer section 34 in the track 5. The buffer section 34 is in a simple and practical form of a casing or jacket round a cut in the track 5. The casing or jacket is fixed to one half of the track 5 and is arranged so that the rollers of the chain 7 will be sufficiently supported with the smallest height variation possible when travelling across the cut in the track 5 covered with the casing or jacket. The reason for the need for small height variations is actually that the buffer section 34 is positioned in the limited area 12, where objects 8 or items are to be handled by individuals 11.

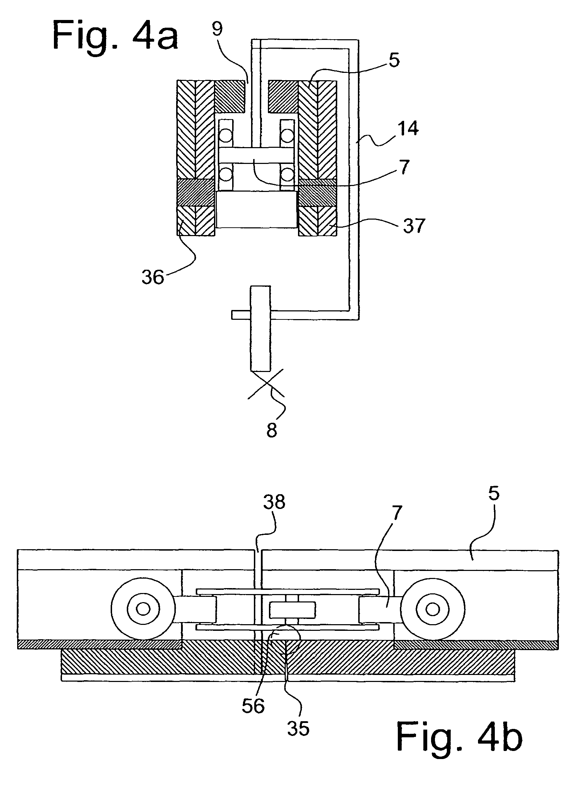

Fig. 4 shows details of chain 7 in track 5. Fig. 4b shows the track 5 at a joint 35 where the limiting or critical distance 56 is emphasized. If articulation is too large the chain 7 will wear the track 5 near the critical area 56. In fig. 4a an articulated joint 35 is shown in direction of the conveyor.

The single- or mono conveyor 1 is basically constructed from a movable chain 7 in a fixed track 5. The movable chain 7 may consist of an actual chain 7 or a purpose-built construction with mechanical stiff elements connected in line partly turnable round joints 35 or links. Furthermore bearings, mostly roller bearings support the movable chain 7 in the fixed track 5. Due to acceleration forces in connection with starting and stopping of the chain 7 some further elastic elements will have to be present. Those elastic elements may be springs in connection with some turn of the track 5. These springs may be part of the track 5 or as a part of the suspension of the track 5.

Items and weight of items may vary significantly handled by a hanging conveyor 1. Items may be small nuts or elements for rack or bookshelves to be painted or coated. The larger parts may be up till 100 kg or even more. The individual distance between the items may be so that the conveyed weight pro meter chain can be 200 kg. Usually the single link is the limiting factor. Often it is possible to design the link to carry a specific burden. The larger burden the larger link and the larger radius in the curvature in the adjustment.

In this publication the word conveyor 1 covers so-called single- or mono conveyor 1. The word conveyor generally covers more broadly transportation, but the features in question in this publication deals only with the single- or mono- or hanging conveyor 1. The reason why other conveyors will not adapt this technique is that the weight of the conveyor 1 compared to the weight of the items conveyed comes into play. With the single- or mono- or hanging conveyor 1 the conveyor 1 it self have a low weight and the movable chain 7 is to some extent elastic and is a closed loop, which means that it is possible to move the track 5 within certain limits. The possibility to move the track 5 is actually a key-point in the invention.

A conveyor 1 for transporting objects 8 in industrial environments and mounted related to fixed building component 3, where the conveyor 1 consists of a track 5 element with a chain 7 element, and where the objects 8 to be handled by the conveyor I are suspended under influence of gravity related to the chain 7 element, and where the objects 8 to be handled are handled in limited areas 12 by individuals 11. The distance 16 between the building component 3 (in fig. 3 the floor 17) and the suspended objects 8 in the limited areas 12 are adjustable according to corresponding individual 11.

The distance 16 between the building component 3 and the suspended objects 8 in the limited area 12 is the height of the object 8 above the floor 17 and that the height adjustable according to the individual 11 is on basis of ergonomics.

Ergonomic based reasons are chosen among lifting height, weight, combined lifting and turning, positioning after handling, repetitive handlings, necessity of using tools for the handling.

The conveyor 1 for transporting objects 8 in industrial environments and mounted related to fixed building component 3 is a conveyor 1 consisting of a track 5 element with a chain 7 element. All sorts of conveyors are used in the industry for moving objects 8 or items from one workstation to the following. In connection with cyclic industrial work a conveyor 1 is an often-used component. Examples of industrial environments can be most not domestic locations, although all locations where successive handling for longer periods can carry the cost of a conveyor 1 or a similar closed transportation system. Some of the more unusual locations may be kitchens, laundries, horticulture or lifts for skier (skiers can be on snow or on water). The more typical locations will be industrial painting, cleaning of motor parts, abattoir, bacon or chicken factory or assembly halls.

The objects 8 to be handled by the conveyor 1 are suspended under influence of gravity related to the chain 7 element, and where the objects 8 to be handled are handled in at least one limited area 12 by an individual 11. The typical situation when using the conveyor 1 according to the invention is spray or powder coating of industrial furniture. Spray or powder coating will often be carried out in electrostatic environment to reduce pollution, decrease waste of paint and introduce more different colours consecutively. The items are mounted 41 and dismounted 47 by individuals 11 often in more-shift working. The chain 7 of the conveyor 1 will only stop in case of emergency. This means that one person takes over often monotonous work on the fly. This calls for the best ergonomic solutions when productivity is crucial.

To enhance ergonomics the distance 16 between the building component 3 and the suspended objects 8 in the limited area 12 is adjustable according to corresponding individual 11. The building component 3 will often be the floor 17. Another situation can be the removing of items from a chain 7 and packing them in boxes for distribution. In this other situation moving the track 5 vertically and horizontally will benefit the ergonomics for the individual 11 or person doing this job. By releasing the individual 11 resources may be used for quality assurance.

The conveyor 1 in this invention is typically a single- or mono- or hanging conveyor. The conveyor is mounted in the ceiling or connected to rafters carrying the roof structure of the building. The conveyor will be infinite. The process may start in welding department, items are mounted to be chemically cleaned or blasted, anticorrosive surface treatment may be applied. The items may then be dismounted for storage. On a later occasion items may be mounted to another conveyor for final coating or assembling and packing.

A preferred conveyor I in mixed industrial environments is a single- or mono- or hanging conveyor, where the track 5 element is a single track 5, and where the track 5 is fixed at least most of the route related to the building component, and where the chain 7 is movable related to the track 5. The conveyor 1 is most preferable a single- or mono- or hanging conveyor 1, where the track 5 element and the chain 7 element is a single track 5, that is either a box (C-shaped) or I-shaped, with a chain 7 positioned within the track 5 or at least within the circumference of the track 5. The objects 8 to be handled by the conveyor 1 are suspended downwards - related to gravity - from the chain 7. Usually the chain 7 will not move so fast that acceleration forces will be significant. After all chain 7 speed will be adjusted after the slowest process.

The chain 7 is preferably positioned within the track 5, so that the track 5 at least partly encloses the chain 7. An aperture 9 in the track 5 (the C-shaped track) is provided through which the objects 8 are related to the chain 7. The aperture 9 is positioned in the side of the track 5, preferably in the topside or the bottomside - relative to gravity. The position of the aperture 9 is interesting from a contamination point of view. The chain 7 will have to be lubricated, which is usually automated. Lubrication may take place on a specific location e.g. after the cleaning or blasting. Care must be taken that the necessary lubrication of the chain 7 will not contaminate the items. This can be enhanced by deciding which side the aperture 9 is positioned e.g. upwards or downwards (or topside or bottomside of the track).

The distance between suspended objects 8 and the chain 7 is usually fixed or at least not variable after the object 8 in question is positioned relative to the chain 7. The distance may be determined by a piece of wire 14 or an individual fixture for that specific object 8, where that wire 14 can be monofilament with a diameter up till 15 mm, preferably between 0.8 mm and 5 mm, most preferable about 1.2 mm. The adjustable distance 16 is the distance 16 between the floor 17 and the object 8 or item. The adjustment is carried out between the track 5 and building component i.e. ceiling, walls and floor 17.

The distance 16 between the building component and the suspended objects 8 in the limited area 12 is the height of the object 8 above the floor 17, where this height is adjustable through height adjustable means 31, and that the height is adjustable according to the individual 11 on basis of ergonomics. The height adjustable means 31 acts upon the distance 16 between the fixed building component 3 and the suspended objects 8 in the limited area 12, preferably that the height adjustable means 31 acts upon the distance 16 between the fixed building component 3 and the track 5 element. The ergonomic based reasons are chosen among, lifting height, weight, combined lifting and turning, positioning after handling, repetitive handlings or necessity of using tools for the handling of the objects 8. The limited area 12 is preferably near by the handling area 24, 25 where the individual 11 has to mount 41 or dismount 47 objects 8 to the conveyor 1.

The height adjustable means 31 are consisting of electro motors, rack and pinion drive 51, 52, hydraulic rotating or linear motors, worm gear, servomotors or linear actuators, controlled according to the individual 11 on basis of ergonomics and mounted as suspension of the track 5 related to the fixed building component 3. All usual electromechanical or hydraulic motors can be used for adjusting the distance 16 between floor 17 and the item or object 8. The word motors has in this publication the most extended meaning. Actually the motor will on basis of information from the individual 11 move the track 5 to that position (within reasonable limits) leaving the objects 8 or items to be handled in the most ergonomically position to be handled. A physiotherapist or the computer system connected to the conveyor 1 may advise the individual 11 which position may be the most appropriate for that specific handling.

The motor may perform the movement through levers, spindles or other similar connection means. The motor delivers the dynamic and sensors and brakes supply the static and keep the track 5 in position after adjustment. There may be positioned sensors to detect the objects 8 or items position, but as the chain 7 move continuously specific object 8 or item position may be inaccurate.

The height adjustable means 31 are controlled by one or more of the following control arrangements, pushbuttons manually activated by the individual 11, automatic by a computer based on a suitable input, or a combination manually and automatic. The suitable input can be one or more of the following static or dynamic inputs, identification of the individual 11 or identification of the object 8. All the information needed for the handling of the specific object 8 or item may be used.

The height adjustable means 31 can be controlled automatically by input from a computer containing information of sequentially following object 8 in the production line. Furthermore barcodes connected to the object 8 can be read to identify the object 8 or item, or performing image recognition on the objects 8.

The limited area 12 is usually near by the handling area 24, 25, where the individual I 1 has to mount 41 or dismount 47 objects 8 to the conveyor 1. The reason for the limited number is actually, that the invention may be applied to existing conveyors including sufficient chain 7 tension compensators. The number of limited areas 12 is between 1 and 10, preferably between 2 and 5, most preferably 2 till 3. The amount of adjustment in each area 12 is limited by the total amount of adjustment for all the areas 12, due to the total amount of compensation available by the chain 7 tension compensators. Each individual 11 along the conveyor I may be able to select amount of adjustment in own limited area 12.

The track 5 consists articulated joints 35 near those limited areas 12 where the distance 16 between the building component 3 and the suspended objects 8 is adjustable according to the individual 11 on basis of ergonomics. Those articulated joints 35 give the track 5 moveability in preferably one direction i.e. vertically or horizontally corresponding to gravity. Each articulated joint 35 might only supply sufficient articulation till the chain 7 nearly reaches the top or bottom of the track 5. Alternatively the chain 7 or the track 5 will be wom and damaged.

A simple and well working mode for an articulated joint 35 is two pieces of sheet metal 36, 37 with each end bolted to each side of a cut 38 through the track 5. Each sheet metal 36, 37 being positioned so that it possesses the least resistance to the moveability in that direction, where adjustment is needed.

The conveyor 1 with the height adjustable means 31 controlled according to the individual 11 on basis of ergonomics for increase or decrease of the distance 16 to the fixed building component when the height adjustable means 31 are activated. When not activated they lock in position so that the track 5 will be secured with a fixed distance related to the fixed building component. In most cases the height adjustable means 31 will be the only securing of the limited areas 12 to the building component.

The invention is not limited to the abovementioned best mode but may be modified by a man skilled in the art within the scope of the appended claims.

## Claims

1. Conveyor (1) for transporting objects (8) in industrial environments and mounted related to fixed building component (3), where the conveyor (1) consists of a track (5) element with a chain (7) element, and where the objects (8) to be handled by the conveyor (1) are suspended under influence of gravity related to the chain (7) element, and where the objects (8) to be handled are handled in at least one limited area (12) by an individual (11), characterise e d in that the distance (16) between the building component (3) and the suspended objects (8) in the limited area (12) is adjustable according to corresponding individual (11).

2. Conveyor (1) according to claim 1, **characterised in that** the conveyor (1) is a single- or mono- or hanging conveyor (1).

3. Conveyor (1) according to claims 1 or 2, **characterised in that** the conveyor (1) is a single- or mono- or hanging conveyor (1), where the track (5) element is a single track (5), and where the track (5) is fixed related to the building component (3), and where the chain (7) is movable related to the track (5).

4. Conveyor (1) according to claims 1 - 3, **characterised in that** the conveyor (1) is a single- or mono- or hanging conveyor (1), where the track (5) element and the chain (7) element is a single track (5) with a chain (7) positioned within the track (5), and where the objects (8) to be handled by the conveyor (1) are suspended downwards - related to gravity - from the chain (7).

5. Conveyor (1) according to claims 1 - 4, **characterised in that** the track (5) with the chain (7) positioned within the track (5) is a track (5) partly enclosing the chain (7), where an aperture (9) in the track (5), through which the objects (8) are related to the chain (7), is positioned in the side of the track (5), preferably in the topside or the bottomside - relative to gravity.

6. Conveyor (1) according to claims 1 - 5, **characterised in that** the relation between the object (8) and the chain (7) element is the fixed distance between suspended objects (8) and the chain (7), where this distance is determined by a piece of wire (14) or an individual fixture for that specific object (8), where that wire (14) can be monofilament with a diameter up till 15 mm, preferably between 0.8 mm and 5 mm, most preferable about 1.2 mm.

7. Conveyor (1) according to claims 1 - 6, **characterised in that** the distance (16) between the building component (3) and the suspended objects (8) in the limited area (12) is the height of the object (8) above the floor (17), where this height is adjustable through height adjustable means (31), and that the height is adjustable according to the individual (11) on basis of ergonomics.

8. Conveyor (1) according to claims 1 - 7, **characterised in that** the height adjustable means (31) acts upon the distance (16) between the fixed building component (3) and the suspended objects (8) in the limited area (12), preferably that the height adjustable means (31) acts upon the distance (16) between the fixed building component (3) and the track (5) element.

9. Conveyor (1) according to claims 1 - 8, **characterised in that** ergonomic based reasons are chosen among, lifting height, weight, combined lifting and turning, positioning after handling, repetitive handlings or necessity of using tools for the handling of the objects (8).

10. Conveyor (1) according to claims 1 -9, **characterised in that** the limited area (12) is near by the handling area (24, 25), where the individual (11) has to mount or dismount objects (8) to the conveyor (1).

11. Conveyor (1) according to claims 1 - 10, **characterised in that** the height adjustable means (31) are consisting of electro motors, rack and pinion drive, hydraulic rotating or linear motors, worm gear, servomotors or linear actuators, controlled according to the individual (11) on basis of ergonomics and mounted as suspension of the track (5) related to the fixed building component (3).

12. Conveyor (1) according to claims 1 - 11, **characterised in that** the height adjustable means (31) are controlled by one or more of the following control arrangements, pushbuttons manually activated by the individual (11), automatic by a computer based on a suitable input, or a combination manually and automatic, where the suitable input can be one or more of the following static or dynamic inputs, identification of the individual (11) or identification of the object (8).

13. Conveyor (1) according to claims 1 - 12, **characterised in that** the height adjustable means (31) are controlled automatically by input from a computer containing information of sequentially following object (8), or reading barcodes connected to the object (8), or performing image recognition on the objects (8).

14. Conveyor (1) according to claims 1 - 13, **characterised in that** the limited area (12) is near by the handling area (24, 25), where the individual (11) has to mount or dismount objects (8) to the conveyor (1), and that the number of limited areas (12) is between 1 and 10, preferably between 2 and 5, most preferably 2 till 3, and that the amount of adjustment in each area (12) is limited by the total amount of adjustment for all the areas (12), and that each individual (11) along the conveyor (1) is able to select amount of adjustment in own limited area (12).

15. Conveyor (1) according to claims 1 - 14, **characterised in that** the track (5) consists articulated joints (35) near those limited areas (12) where the distance (16) between the building component (3) and the suspended objects (8) is adjustable according to the individual (11) on basis of ergonomics, where those articulated joints (35) give the track (5) moveability in preferably one direction i.e. vertically or horizontally corresponding to gravity.

16. Conveyor (1) according to claims 1 - 15, **characterised in that** each articulated joint (35) consist of two pieces of sheet metal (36, 37) with each end bolted to each side of a cut (38) through the track (5), where each sheet metal (36, 37) being positioned so that it possesses the least resistance to the moveability.

17. Conveyor (1) according to claims I - 16, **characterised in that** the height adjustable means (31) controlled according to the individual (11) on basis of ergonomics increase or decrease the distance (16) to the fixed building component (3) when activated, and when not activated locks in position so that the track (5) will be secured with a fixed distance (16) related to the fixed building component (3).
